# EUROPÄISCHE PATENTSCHRIFT

(11) **EP 2 886 316 B1**
(45) Veröffentlichungstag und Bekanntmachung des Hinweises auf die Patenterteilung: **28.09.2016**
(21) Anmeldenummer: 13198929.5
(22) Anmeldetag: 20.12.2013
(51) Int. Cl.: B29D 99/00, F03D 1/06, B29C 31/00

(54) **Vorrichtung zur Arbeitserleichterung bei der Herstellung eines Bauteils für ein Windenergieanlagenrotorblatt in einer Herstellungsform**
Device for simplifying the work involved in the manufacture of a component for a wind energy system rotor blade in a manufacturing mould
Dispositif de simplification du travail dans la fabrication d'un composant pour une pale de rotor d'éolienne dans un moule de fabrication

(43) Veröffentlichungstag der Anmeldung: 24.06.2015
(73) Patentinhaber: Nordex Energy GmbH, 22419 Hamburg (DE)
(72) Erfinder: Kriedemann, Uwe, 17166 Teterow (DE)
(74) Vertreter: Hauck Patentanwaltspartnerschaft mbB

(56) Entgegenhaltungen:
- EP-A2- 2 447 521
- WO-A1-2013/064152
- US-A1- 2012 138 218

## Beschreibung

Die Erfindung betrifft eine Vorrichtung zur Arbeitserleichterung bei der Herstellung eines Bauteils für ein Windenergieanlagenrotorblatt in einer Herstellungsform. Windenergieanlagenrotorblätter werden zumeist aus Faserverbundwerkstoffen in sehr großen Herstellungsformen hergestellt. Dabei sind zahlreiche Arbeitsschritte zum Teil von Hand auszuführen, zum Beispiel Vorarbeiten an der Herstellungsform, Einlegen von Materialien in die Form, Abdecken der Form mit einer Vakuumfolie, Überwachen einer Vakuuminfusion, Nachbearbeiten des Bauteils, Entnehmen des Bauteils aus der Herstellungsform, und so weiter. Um diese Arbeiten sachgerecht ausführen zu können, sind zahlreiche Hilfsmittel erforderlich.

Aus der Druckschrift EP 2 447 521 A2 ist eine Vorrichtung zur Arbeitserleichterung bekannt geworden, bei der eine Traverse oberhalb zweier Herstellungsformen für ein Windenergieanlagenrotorblatt verfahrbar ist. Eine Seite der Traverse fährt auf einer aufgeständerten Schiene. Die andere Seite der Traverse weist eine seitliche Stütze mit Rädern auf, die auf einer Schiene am Boden geführt sind. Die bekannte Vorrichtung ist für einen automatisierten Klebstoffauftrag vorgesehen.

Bekannt sind auch Vorrichtungen zur Arbeitserleichterung, die ein Laufgestell mit einer Lauffläche aufweisen, welches zur Anordnung an einer Herstellungsform vorgesehen ist. Die Lauffläche ermöglicht den im Bereich der Herstellungsform arbeitenden Personen einen einfachen und sicheren Zugang insbesondere zu den Rändern der Herstellungsform. Weiterhin bekannt sind Portalwagen mit einer Traverse und einer damit verbundenen, seitlichen Stütze, an der Räder angeordnet sind, wobei der Portalwagen zum Verfahren entlang der Herstellungsform bei oberhalb der Herstellungsform angeordneter Traverse vorgesehen ist. Der Portalwagen kann für unterschiedliche Aufgaben eingesetzt werden, insbesondere zum Abrollen von Fasermaterialien beim Anordnen der Fasermaterialien in der Herstellungsform, zum Ausbringen sonstiger Materialien, etwa von Folien oder Klebstoffen, oder zum Anordnen von Werkzeugen

Die Druckschrift US 2012/0138218 A1 offenbart eine Vorrichtung gemäß dem Oberbegriff des Anspruchs 1.

Davon ausgehend ist es die Aufgabe der Erfindung, eine Vorrichtung zur Arbeitserleichterung zur Verfügung zu stellen, bei der die Lauffläche einen optimalen Zugang zur Herstellungsform bietet, der Portalwagen einfach verfahrbar ist und die gesamte Vorrichtung besonders kompakt aufgebaut ist.

Diese Aufgabe wird gelöst durch die Vorrichtung mit den Merkmalen des Anspruchs 1. Vorteilhafte Ausgestaltungen sind in den sich anschließenden Unteransprüchen angegeben.

Die Vorrichtung dient zur Arbeitserleichterung bei der Herstellung eines Bauteils für ein Windenergieanlagenrotorblatt in einer Herstellungsform und umfasst Folgendes:
- ein Laufgestell, das eine Lauffläche aufweist, die zur Anordnung an der Herstellungsform vorgesehen ist,
- einen Portalwagen mit einer Traverse und einer damit verbundenen, seitlichen Stütze, an der Räder angeordnet sind, wobei der Portalwagen zum Verfahren entlang der Herstellungsform bei oberhalb der Herstellungsform angeordneter Traverse vorgesehen ist, und wobei
- die Lauffläche eine Öffnung aufweist, durch die die Stütze hindurchführbar ist.

Das Bauteil kann insbesondere eine Halbschale oder ein sonstiges Bauteil des Windenergieanlagenrotorblatts sein, das eine aerodynamische Fläche des Rotorblatts bildet. Es kann sich auch um ein Element einer Tragstruktur des Rotorblatts handeln, insbesondere um einen Steg oder Gurt. Die Herstellungsform kann eine äußere Oberfläche des Bauteils vorgeben. Die Herstellungsform kann auf einer stabilen Unterkonstruktion zum Beispiel auf dem Boden einer Halle angeordnet sein. Die Unterkonstruktion kann beispielsweise aus einer fachwerkartigen Anordnung von Stahlträgern bestehen. Die Herstellungsform kann einen Rand aufweisen, der auf unterschiedlicher Höhe relativ zu dem Boden angeordnet ist. Im Falle einer Herstellungsform für eine Rotorblatthalbschale kann der Höhenunterschied zwischen einem niedrigsten und einem höchsten Punkt des Randes der Herstellungsform beispielsweise im Bereich von 10 cm bis 4 m liegen, häufig im Bereich von etwa 50 cm bis 2 m. Der niedrigste Punkt kann im Bereich einer Blattwurzel und/oder einer Blattspitze angeordnet sein und der höchste Punkt in einem mittleren Abschnitt der Herstellungsform, oder umgekehrt.

Die Lauffläche bildet einen Laufweg, der beispielsweise mit Platten aus einem Holzwerkstoff oder aus Metall beplankt sein kann. Die Lauffläche kann eine Breite im Bereich von beispielsweise 1,0 m bis 2,5 m aufweisen und eine wesentlich größere Länge, zum Beispiel entsprechend der Länge der Herstellungsform. Die Lauffläche ist zumindest teilweise an dem Laufgestell, das zum Beispiel eine auf einem Boden einer Halle befestigte, stabile Unterkonstruktion aus Stahlrohren aufweisen kann, befestigt. Sie ist zur Anordnung an der Herstellungsform vorgesehen, insbesondere derart, dass sich die Lauffläche nahe dem Rand einer Herstellungsform und unterhalb davon befindet, sodass eine auf der Lauffläche stehende Person sicheren Stand findet und bequem am Rand oder innerhalb der Herstellungsform arbeiten kann.

Der Portalwagen ist zum Verfahren entlang der Herstellungsform vorgesehen. Insbesondere kann er in einer Längsrichtung der Herstellungsform verfahren werden und über deren gesamte Länge. Er weist eine Traverse auf, die insbesondere quer zur Verfahrrichtung angeordnet sein kann und die sich beim Arbeiten mit der Vorrichtung oberhalb der Herstellungsform befindet. Die Traverse kann zwei oder mehr zu beiden Seiten der Herstellungsform angeordnete Stützen miteinander verbinden. Sie kann zur Anordnung von Werkzeugen, Arbeitsmitteln oder -materialien oberhalb der Herstellungsform verwendet werden. Insbesondere kann die Traverse eine Rolle mit Fasermaterialien tragen, von der die Fasermaterialien abgerollt und auf diese Weise beim Verfahren des Portalwagens in der Herstellungsform abgelegt werden können.

Der Erfinder hat erkannt, dass die Verwendung eines breiten Portalwagens, dessen Stütze seitlich außerhalb der Lauffläche angeordnet ist, zu einer sehr raumgreifenden Vorrichtung führt. Das kann insbesondere bei Herstellungsformen für Rotorblatthalbschalen der Fall sein. Der Portalwagen muss dabei den Bereich der größten Rotorblatttiefe und zwei Laufflächen überspannen. Grundsätzlich soll die Lauffläche zugleich einen möglichst geringen seitlichen Abstand vom Rand der Herstellungsform aufweisen, um ein bequemes und sicheres Arbeiten zu ermöglichen. Die Stütze kann daher auch nicht ohne weiteres durch einen Spalt zwischen Lauffläche und Herstellungsform geführt werden. Dies gilt insbesondere bei Herstellungsformen, deren Breite über ihre Länge stark variiert. Bei einem oberhalb der Lauffläche angeordneten und an den Verlauf der Herstellungsform angepassten Schienensystem müssten beim Verfahren des Portalwagens Steigungen und Gefälle überwunden werden, was einen kräftigen Antrieb und ein Bremssystem für den Portalwagen erfordern würde.

Bei der Erfindung weist stattdessen die Lauffläche eine Öffnung auf, durch die die Stütze hindurchführbar ist. D.h., die Lauffläche weist in ihrem Verlauf in zumindest einem Längsbereich zwei voneinander beabstandete Teilflächen auf. Die Schienen für die Räder des Portalwagens können dann zumindest teilweise unterhalb der Lauffläche und mit gleichbleibendem Abstand vom Boden oder am Boden angeordnet sein, sodass keine dem Verlauf der Lauffläche entsprechenden Steigungen oder Gefälle überwunden werden müssen. Zugleich kann der Portalwagen verhältnismäßig schmal ausgeführt werden, sodass eine Stütze im Bereich der größten Breite der Herstellungsform nahe am Rand der Herstellungsform vorbeifährt. Die Vorrichtung ist dadurch insgesamt besonders platzsparend.

In einer Ausgestaltung ist an dem Laufgestell eine Klappe angeordnet, die in einer geschlossenen Stellung einen Abschnitt der Öffnung abdeckt und in einer geöffneten Stellung ein Verfahren der Stütze in dem Abschnitt der Öffnung erlaubt. Um ein Hindurchführen der Stütze durch die Öffnung und ein problemloses Verfahren des Portalwagens in einer Längsrichtung der Öffnung zu ermöglichen, muss die Öffnung eine Mindestbreite aufweisen, die zum Beispiel im Bereich von 2 cm bis 30 cm liegen kann. Die Öffnung kann daher die Benutzbarkeit der Lauffläche einschränken und unter Umständen sogar ein Sicherheitsrisiko darstellen, weil eine Person zum Beispiel mit dem Fuß in die Öffnung geraten und dadurch oder durch eine die Öffnung durchfahrende Stütze eingeklemmt oder verletzt werden könnte. Dieser Gefahr wird durch die Klappe entgegengewirkt, indem diese in ihrer geschlossenen Stellung den betreffenden Abschnitt der Öffnung abdeckt.

In einer Ausgestaltung sind an der Stütze Mittel angeordnet, die die Klappe von der geschlossenen Stellung in die geöffnete Stellung bewegen, wenn die Stütze auf den Abschnitt der Öffnung zubewegt wird. Grundsätzlich kann die Klappe auch von Hand geöffnet und geschlossen werden. Ein automatisches Öffnen der Klappe infolge der Verfahrbewegung des Portalwagens ist jedoch besonders vorteilhaft. Da sich der Portalwagen in beiden Richtungen entlang der Herstellungsform bewegt, versteht es sich, dass die Mittel zum Bewegen der Klappe auf beiden Seiten der Stütze angeordnet sind.

In einer Ausgestaltung weisen die Mittel eine schräge Kante oder Fläche auf, die so angeordnet ist, dass sie beim Bewegen der Stütze auf den Abschnitt der Öffnung zu unter die Klappe greifen und die Klappe anheben. Bei den Mitteln kann es sich beispielsweise um einen Bügel oder ein Blech handeln. So wird auf einfache Weise ein automatisches Öffnen der Klappe beim Verfahren des Portalwagens erreicht.

In einer Ausgestaltung sind an der Stütze Mittel angeordnet, die die Klappe in der geöffneten Position halten, während der Portalwagen durch den Abschnitt der Öffnung bewegt wird. Die Mittel können beispielsweise als Leitbleche ausgebildet sein, welche zwischen zwei Stützen befestigt sind.

In einer Ausgestaltung ist die Klappe so angeordnet, dass sie sich beim Entfernen der Stütze von dem Abschnitt der Öffnung automatisch schließt. Das automatische Schließen der Klappe kann beispielsweise durch die auf die Klappe wirkende Schwerkraft bewirkt werden.

In einer Ausgestaltung ist am Laufgestell ein elastisches Element angeordnet, das die Klappe mit einer Kraft in Richtung zu der geschlossenen Stellung hin beaufschlagt. Diese Maßnahme kann ein durch die Schwerkraft bewirktes automatisches Schließen der Klappe ersetzen oder ergänzen.

In einer Ausgestaltung ist eine Seite der Klappe an einem seitlichen Rand der Öffnung an einer in Verfahrrichtung des Portalwagens angeordneten Schwenkachse angelenkt. In ihrer geschlossenen Stellung kann die Klappe an dem der Schwenkachse gegenüberliegenden seitlichen Rand der Öffnung an- oder aufliegen. Ein Öffnungswinkel der Klappe kann durch einen Anschlag so begrenzt sein, dass die Klappe in ihrer geöffneten Stellung im Wesentlichen vertikal ausgerichtet ist und/oder so, dass sie sich aufgrund der auf sie wirkenden Schwerkraft automatisch wieder in ihre geschlossene Stellung bewegt.

In einer Ausgestaltung ist eine Vielzahl von Klappen in Verfahrrichtung des Portalwagens nebeneinander angeordnet. Auf diese Weise kann die gesamte Öffnung oder ein Längsabschnitt der Öffnung, in dem die Öffnung eine vorgegebene Breite überschreitet, vollständig abgedeckt werden. Benachbarte Klappen können eine gemeinsame Schwenkachse aufweisen.

In einer Ausgestaltung ist an jeder Seite der Traverse eine Stütze angeordnet und ein orthogonal zu einer Verfahrrichtung des Portalwagens gemessener, seitlicher Abstand der Stützen voneinander nimmt in einem Höhenbereich mit zunehmender Höhe zu. Insbesondere können in dem Höhenbereich angeordnete Abschnitte der Stützen schräg nach außen verlaufen. Dadurch wird der zwischen den Stützen zum Umgreifen der Herstellungsform befindliche Raum vergrößert. Die Schienen können weiter innen verlaufen, sodass der Portalwagen im Bereich des Bodens weniger Raum beansprucht.

In einer Ausgestaltung sind an dem Portalwagen Mittel zum Abrollen eines Faser- oder Folienmaterials und/oder Mittel zum Auftragen eines Klebstoffs angeordnet. Die Mittel zum Abrollen können insbesondere eine Aufnahme für eine Rolle des entsprechenden Materials aufweisen.

In einer Ausgestaltung ist die Vorrichtung mit einer Herstellungsform für ein Bauteil eines Windenergieanlagenrotorblatts kombiniert, wobei sich die Lauffläche über die gesamte Länge der Herstellungsform erstreckt und in variierender Höhe angeordnet ist. Insbesondere kann die Lauffläche in einem im Wesentlichen konstanten vertikalen Abstand unterhalb eines Rands der Herstellungsform angeordnet sein. Die Lauffläche kann an einem oder mehreren Punkten, insbesondere an den Enden der Herstellungsform, bis auf die Höhe des Bodens abgesenkt sein, sodass ein einfaches Betreten möglich ist. Die Herstellungsform kann eine Unterkonstruktion aufweisen, beispielsweise aus Stahlrohr, die auf dem Boden einer Halle verankert sein kann. Die Lauffläche kann an einem Laufgestell befestigt sein, welches mit der Unterkonstruktion der Herstellungsform verbunden ist.

In einer Ausgestaltung ist eine Schiene vorhanden, auf der die Räder des Portalwagens abrollen. Dadurch wird ein einfaches Verfahren des Portalwagens entlang einer fest vorgegebenen Bahn erzielt.

In einer Ausgestaltung ist eine der Schienen über die gesamte Länge der Herstellungsform auf gleicher Höhe über einem Boden angeordnet. Die Schiene kann teilweise oberhalb und teilweise unterhalb der Lauffläche verlaufen. In einem Abschnitt der Lauffläche, in dem die Schiene auf gleicher Höhe wie die Lauffläche angeordnet ist, kann die Schiene durch die Öffnung in der Lauffläche hindurchgeführt sein. Die horizontale Anordnung der Schiene vereinfacht das Verfahren des Portalwagens. Ein Antriebsmotor und eine Bremse zum Überwinden von Höhenunterschieden sind im Allgemeinen nicht erforderlich.

Nachfolgend wird die Erfindung anhand eines in sechs Figuren dargestellten Ausführungsbeispiels näher erläutert. Es zeigen:
- Fig. 1: eine Vorrichtung zur Arbeitserleichterung mit einem Portalwagen und einem Laufgestell an einer Herstellungsform in einer perspektivischen, zum Teil vereinfachten Darstellung,
- Fig. 2: den Portalwagen aus Fig. 1 in einer Ansicht von der Seite,
- Fig. 3: den Portalwagen aus Fig. 1 in einer Ansicht von vorn,
- Fig. 4: schematische Querschnittsdarstellungen der Vorrichtung aus Fig. 1,
- Fig. 5: einen Teil einer Lauffläche des Laufgestells aus Fig. 1 in einer schematischen Darstellung von oben,
- Fig. 6: eine schematische Darstellung eines Ausschnitts der Vorrichtungen aus Fig. 1 in einer Ansicht von der Seite.

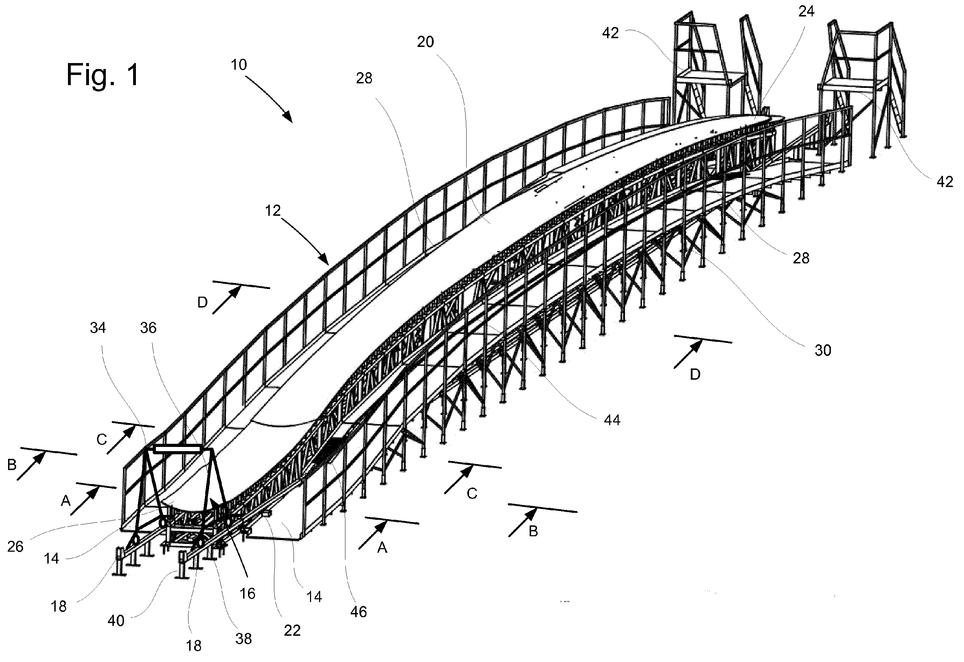

Die in der Fig. 1 gezeigte Vorrichtung 10 zur Arbeitserleichterung weist zwei Laufgestelle 12 mit jeweils einer Lauffläche 14 und einen nur schematisch dargestellten Portalwagen 16 auf, der auf zwei horizontal und parallel zu einander angeordneten Schienen 18 geführt ist. Zwischen den beiden Laufgestellen 12 ist eine Herstellungsform 20 zur Herstellung eines Gurtes für ein Windenergieanlagenrotorblatt angeordnet.

Die Herstellungsform 20 hat eine nach oben weisende innere Fläche, die eine äußere Oberfläche eines darin gefertigten Gurtes vorgibt. Die Herstellungsform 20 ruht auf einer fachwerkartigen Unterkonstruktion 22 aus Stahlrohren und ist fest auf dem Boden einer Halle verankert. Die Herstellungsform 20 erstreckt sich von einem Blattwurzelbereich 26 bis zu einem Blattspitzenbereich 24 über eine Länge von beispielsweise im Bereich zwischen 20 m und 80 m. Die Herstellungsform 20 hat zwei einander gegenüberliegende Ränder 28, die sich vom Blattwurzelbereich 26 bis zum Blattspitzenbereich 24 erstrecken und einen variierenden Abstand voneinander aufweisen. Dieser Abstand kann beispielsweise im Bereich der Blattspitze ungefähr 30 cm und im Bereich der maximalen Tiefe des Rotorblattes ungefähr ca. 4 m betragen.

Der Abstand der Herstellungsform 20 zum Boden variiert ebenfalls. Im gezeigten Beispiel handelt es sich um eine Herstellungsform 20 für einen Gurt für eine druckseitige Halbschale, die wegen der für einen ausreichenden Turmfreigang erforderlichen Vorbiegung des Rotorblatts im Blattspitzenbereich 24 zur Druckseite hin gekrümmt ist. Darum befinden sich der Blattspitzenbereich 24 und der Blattwurzelbereich 26 der Herstellungsform 20 in einer relativ geringen Höhe im Bereich von beispielsweise 20 cm bis 1 m über dem Boden, während ein mittlerer Abschnitt höher angeordnet ist, beispielsweise auf einer Höhe im Bereich von 1 m bis 3 m.

Die beiden Laufgestelle 12 sind zu beiden Seiten der Herstellungsform 20 angeordnet und erstrecken sich über deren gesamte Länge, vom Blattwurzelbereich 26 bis zum Blattspitzenbereich 24. Sie weisen jeweils eine stabile Unterkonstruktion 30 aus Stahlkastenrohren auf, die fachwerkartig ausgebildet ist. Die Laufflächen 14 erstrecken sich ebenfalls über die gesamte Länge der Herstellungsform 20 und sind an ihren beiden Enden bis auf die Höhe des Bodens abgesenkt. Die Höhe der Laufflächen 14 folgt im Wesentlichen der Höhe des jeweiligen, benachbart angeordneten Rands 28 der Herstellungsform 20 mit einem vorgegebenen vertikalen Abstand von etwa 70 cm, sodass sich ein mittlerer Abschnitt der Laufflächen 14 auf einer Höhe von ungefähr im Bereich von 0,5 m bis 2,0 m über dem Boden befindet. An der von der Herstellungsform 20 abgewandten Seite weist jedes Laufgestell 12 ein Geländer 32 auf.

Der Portalwagen 16 weist eine Traverse 34 und an beiden Seiten der Traverse 34 angeordnete, im Wesentlichen vertikale Stützen 36 auf, an deren unteren Enden Räder 38 angeordnet sind. Die Räder 38 sind auf zwei parallel angeordneten Schienen 18, die mit kurzen Ständern 40 auf dem Hallenboden befestigt sind, geführt. Die Schienen 18 erstrecken sich zu beiden Seiten etwas über die Länge der Herstellungsform 20 hinaus, sodass der Portalwagen 16 über die Enden der Herstellungsform 20 hinaus verfahren werden kann. An den nahe des Blattspitzenbereichs 24 angeordneten Enden der Schienen 18 ist jeweils eine Arbeitsplattform 42 angeordnet, von denen aus die Traverse 34 des Portalwagens 16 bequem erreichbar ist.

Die beiden Laufflächen 14 weisen jeweils eine langgestreckte Öffnung 44 auf, durch die hindurch die Stützen 36 des Portalwagens 16 verlaufen, wenn der Portalwagen 16 durch einen entsprechenden Längsabschnitt der Laufflächen 14 fährt. Da sich die Schienen 18 in einem gewissen Abstand über dem Boden befinden und die Laufflächen 14 bis auf die Höhe des Bodens abgesenkt sind, gibt es einen Bereich 46, in dem die Schienen 18 durch die Öffnung 44 der Laufflächen 14 hindurchtreten.

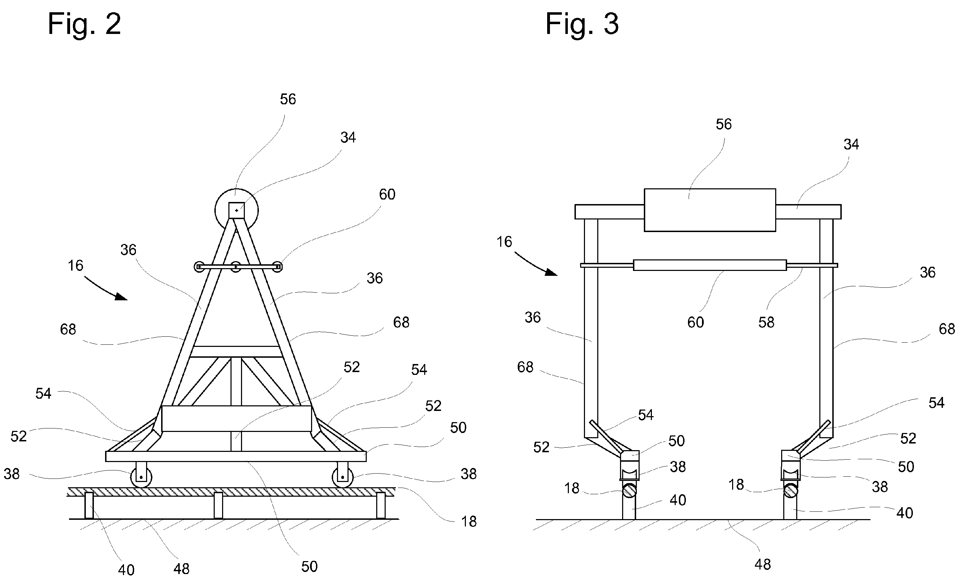

Einzelheiten des Portalwagens sind besser in den Figuren 2 und 3 erkennbar, die gemeinsam erläutert werden. In diesen beiden Figuren erkennt man unten den Boden 48 und die mithilfe der Ständer 40 darüber angeordneten Schienen 18. Der Portalwagen 16 weist insgesamt vier Räder 38 auf, von denen jeweils zwei auf einer der Schienen 18 abrollen und an einer Längsstrebe 50 befestigt sind. Der Abstand zwischen den beiden Längsstreben 50 des Portalwagens 16 ist geringer als die größte Breite der Herstellungsform 20.

Der Portalwagen 16 weist an seinem oberen Ende eine quer angeordnete Traverse 34 auf, die über zwei seitliche Anordnungen mehrerer Stützen 36 auf den Längsstreben 50 abgestützt ist. Die Stützen 36 weisen jeweils einen oberen, im Wesentlichen vertikal angeordneten Abschnitt 68 auf, der sich von der Traverse 34 ausgehend nach unten erstreckt. Unterhalb davon schließen sich schräg angeordnete Abschnitte 52 der Stützen 36 an, die die unteren Enden der oberen Abschnitte 68 mit jeweils einen der Längsstreben 50 verbinden. Diese schräg angeordneten Abschnitte 52 weisen einen mit zunehmender Höhe zunehmenden Abstand voneinander auf, laufen also nach unten zusammen.

An den in Verfahrrichtung vorderen und hinteren Enden des Portalwagens 16 sind schräg angeordnete Bügel 54 angeordnet, die jeweils von einem Ende einer Längsstrebe 50 bis zu einem der im Wesentlichen vertikal angeordneten Abschnitte 68 einer Stütze 36 führen.

An der Traverse 34 ist eine Rolle 56 angeordnet, von der beispielsweise ein Fasermaterial abgerollt werden kann. Unterhalb davon gibt es weitere Querverbindungen 58, auf denen weitere Rollen 60, beispielsweise zur Aufnahme eines Folienmaterials, angeordnet sind. Der skizzierte Portalwagen 16 weist eine Reihe weiterer, fachwerkartiger Aussteifungen auf, die nicht mit Bezugszeichen versehen sind.

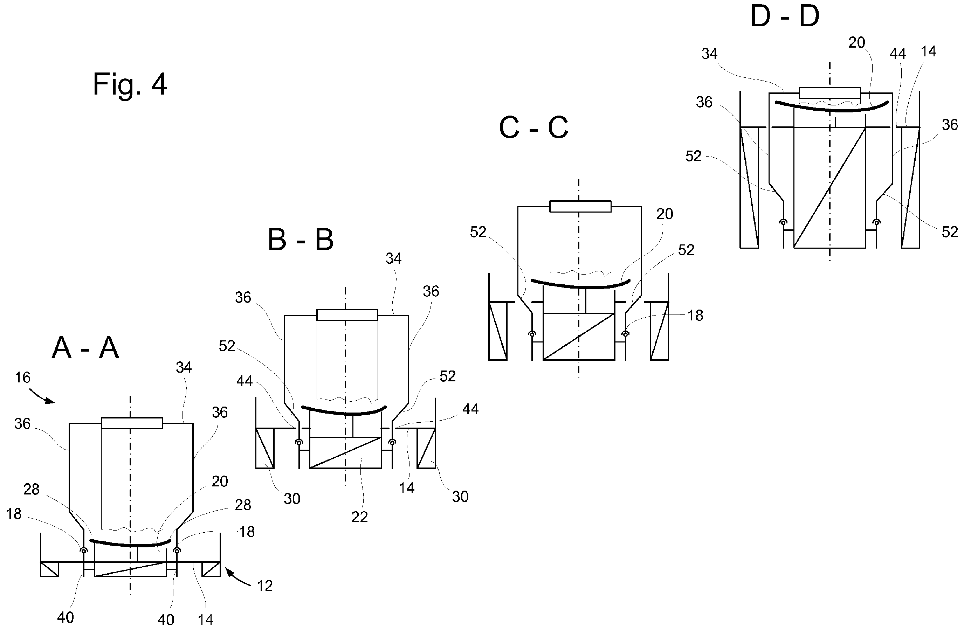

Anhand der schematischen Darstellungen der Figur 4 sollen die relativen Anordnungen des Portalwagens 16 zu den Laufflächen 14 beim Verfahren des Portal-wagens 16 erläutert werden. Dargestellt sind vier Querschnitte, die entsprechend den in Fig. 1 eingezeichneten Schnittebenen mit A-A, B-B, C-C und D-D bezeichnet sind. Die Schnittebene A-A gehört zu einer nahe des Blattwurzelbereichs 26 angeordneten Position des Portalwagens 16. Dort sind die Laufflächen 14 in einer geringen Höhe über dem Boden angeordnet und befinden sich noch unterhalb der Schienen 18. Die Ständer 40, die die Schienen 18 tragen, durchdringen die Laufflächen 14. Im Übrigen können die Laufflächen 14 in diesem Bereich geschlossen sein.

In der mit B-B bezeichneten Schnittebene befinden sich die Laufflächen 14 oberhalb der Schienen 18, wobei sie wie in allen anderen dargestellten Schnittebenen auch einen aus ergonomischer Sicht günstigen vertikalen Abstand zu den Rändern 28 der Herstellungsform 20 einhalten. In diesem Bereich befindet sich jeweils eine langgestreckte Öffnung 44 in jeder der Laufflächen 14, durch die hindurch ein Ständer 36 des Portalwagens 16 geführt und in Längsrichtung der Öffnungen 44 verfahrbar ist. In diesem Bereich ist die Breite der Öffnungen 44 so gewählt, dass ein kurzer, vertikal angeordneter Abschnitt der Stützen 36, der noch unterhalb der schräg angeordneten Abschnitte 52 angeordnet ist, hindurch passt. Man erkennt, dass außerhalb der Öffnungen 44 angeordnete Abschnitte der Laufflächen 14 an den Unterkonstruktionen 30 der Laufgestelle 12 befestigt sind. Innerhalb der Öffnungen 44 angeordnete Abschnitte der Laufflächen 14 sind hingegen an der Unterkonstruktion 22 der Herstellungsform 20 befestigt.

In der Querschnittsebene C-C ist die Herstellungsform 20 in noch größerer Höhe angeordnet und dementsprechend sind es auch die Laufflächen 14. Diese befinden sich weiterhin oberhalb der Schienen 18 und nunmehr im Bereich der schräg angeordneten Abschnitte 52 der Stützen 36. Die Form hat in diesem Abschnitt eine größere Breite als in den Abschnitten der Querschnittsebenen A-A und B-B. Sie überragt die Schienen 18. Durch die schräg angeordneten Abschnitte 52 wird der Abstand der Stützen 36 vergrößert. In diesem Höhenbereich weisen die Öffnungen 44 eine größere Breite auf, damit der Portalwagen 16 auch mit den breiteren, schräg angeordneten Abschnitten 52 die Öffnungen 44 passieren kann.

In dem mit D-D bezeichneten Querschnitt weist die Herstellungsform 20 ihre größte Höhe und Breite auf und die weiter in einem konstanten Abstand unterhalb davon angeordneten Laufflächen 14 befinden sich nunmehr relativ nahe unter der Traverse 34, wobei die vertikal angeordneten Abschnitte 68 der Stützen 36, die von der Traverse 34 nach unten führen, durch die Öffnungen 44 hindurchgeführt sind. In diesem Bereich weisen die Öffnungen 44 eine ähnliche Breite auf wie indem mit B-B bezeichneten Querschnitt.

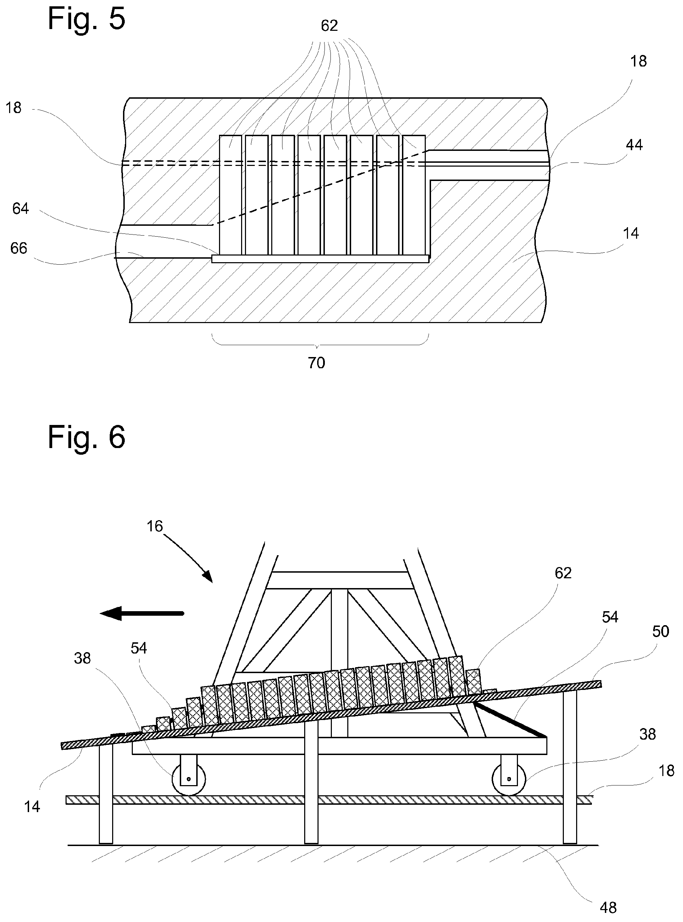

Fig. 5 zeigt eine Draufsicht auf eine Lauffläche 14 mit einer Öffnung 44 im Bereich des in Fig. 4 mit C-C bezeichneten Querschnitts, wo die Öffnung 44 eine größere Breite aufweist. Die seitliche Position der unterhalb der Lauffläche 14 angeordneten Schiene 18 ist in der Fig. 5 ebenfalls dargestellt. In einem Längsabschnitt 70, in dem die Öffnung 44 die angesprochene größere Breite aufweist, ist eine Vielzahl von Klappen 62 angeordnet. Diese sind jeweils an einem Ende an einer gemeinsamen Schwenkachse 64 befestigt, die sich an einem von der Herstellungsform 20 weiter entfernten Rand 66 der Öffnung 44 befindet.

In der Fig. 5 ist der Portalwagen 16 entfernt von den Klappen 62 angeordnet. Diese befinden sich in ihrer geschlossenen Stellung, in der sie die Öffnung 44 abdecken. Die freien Enden der Klappen 62 liegen dabei an dem näher an der Herstellungsform 20 angeordneten Teil der Lauffläche auf, sodass sie gefahrlos betreten werden können. In dem in der Fig. 5 dargestellten Ausschnitt ist der links dargestellte Teil der Lauffläche 14 höher angeordnet als der rechts dargestellte Teil. Darum befindet sich die Öffnung 44 im linken Teil der Figur in einem größeren Abstand von der Herstellungsform 20, was der Position der von der Traverse 34 nach unten führenden, vertikalen Abschnitte der Stützen 36 des Portalwagens 16 entspricht. Der in der Fig. 5 rechts dargestellte Abschnitt zeigt die Öffnung 44 in geringerem Abstand von der Herstellungsform 20 und genau oberhalb der Schiene 18. Dort befindet sich die Öffnung 44 in einer Höhe, die ungefähr der Höhe der Längsstrebe 50 des Portalwagens 16 entspricht. In dem mittleren Abschnitt der Fig. 5, in dem die Öffnung 44 eine größere Breite aufweist, befindet sich die Lauffläche 14 in einem Höhenbereich, in dem die schräg angeordneten Abschnitte 52 der Stützen 36 angeordnet sind.

Fig. 6 zeigt eine Seitenansicht auf einen Teil der Lauffläche 14 mit daran angeordneten Klappen 62 bei in diesem Längsabschnitt angeordnetem Portalwagen 16. Man erkennt auch die unterhalb der Lauffläche 14 angeordnete Schiene 18, auf der die Räder 38 des Portalwagens 16 abrollen. Im Bereich der seitlichen Stützen 36 des Portalwagens 16 befinden sich die Klappen 62 in einer geöffneten oder teilweise geöffneten Stellung. In diese werden sie beim Passieren des Portalwagens 16 automatisch von den an den vorderen und hinteren Enden des Portalwagens angeordneten Bügeln 54 bewegt. Wie insbesondere am in der Fig. 6 links dargestellten Ende des Portalwagens 16 erkennbar, greift der Bügel 54 beim Verfahren des Portalwagens 16 nach links mit seinem niedrigeren Ende unter die Klappen 62 und hebt diese an, bis sie sich in einer geöffneten, annähernd vertikalen Stellung befinden. Nachdem der Portalwagen 16 den betreffenden Längsabschnitt passiert hat, gelangen die Klappen 62 automatisch wieder in ihre geschlossene Stellung zurück. Die Öffnung 44 wird daher nur so lange geöffnet, wie es für die Durchfahrt des Portalwagens 16 erforderlich ist. Anschließend ist sie von den Klappen 62 abgedeckt.

### Liste der verwendeten Bezugszeichen:

- 10: Vorrichtung zur Arbeitserleichterung
- 12: Laufgestell
- 14: Lauffläche
- 16: Portalwagen
- 18: Schiene
- 20: Herstellungsform
- 22: Unterkonstruktion der Herstellungsform
- 24: Blattspitzenbereich
- 26: Blattwurzelbereich
- 28: Rand der Herstellungsform
- 30: Unterkonstruktion des Laufgestells
- 32: Geländer
- 34: Traverse
- 36: Stütze
- 38: Rad
- 40: Ständer
- 42: Arbeitsplattform
- 44: Öffnung
- 46: Bereich
- 48: Boden
- 50: Längsstrebe
- 52: schräg angeordneter Abschnitt
- 54: Bügel
- 56: Rolle
- 58: Querverbindung
- 60: Rolle
- 62: Klappe
- 64: Schwenkachse
- 66: Rand
- 68: oberer Abschnitt
- 70: Längsabschnitt

## Patentansprüche

1. Vorrichtung (10) zur Arbeitserleichterung bei der Herstellung eines Bauteils für ein Windenergieanlagenrotorblatt in einer Herstellungsform (20), wobei die Vorrichtung (10) folgendes umfasst:
• ein Laufgestell (12), das eine Lauffläche (14) aufweist, die zur Anordnung an der Herstellungsform (20) vorgesehen ist, und
• einen Portalwagen (16) mit einer Traverse (34) und einer damit verbundenen, seitlichen Stütze (36), an der Räder (38) angeordnet sind, wobei der Portalwagen (16) zum Verfahren entlang der Herstellungsform (20) bei oberhalb der Herstellungsform (20) angeordneter Traverse (34) vorgesehen ist, **dadurch gekennzeichnet, dass**
• die Lauffläche (14) eine Öffnung (44) aufweist, durch die die Stütze (36) hindurchführbar ist.

2. Vorrichtung (10) nach Anspruch 1, **dadurch gekennzeichnet, dass** an dem Laufgestell (12) eine Klappe (62) angeordnet ist, die in einer geschlossenen Stellung einen Abschnitt der Öffnung (44) abdeckt und in einer geöffneten Stellung ein Verfahren der Stütze (36) in dem Abschnitt der Öffnung (44) erlaubt.

3. Vorrichtung (10) nach Anspruch 2, **dadurch gekennzeichnet, dass** an der Stütze (36) Mittel angeordnet sind, die die Klappe (62) von der geschlossenen Stellung in die geöffnete Stellung bewegen, wenn die Stütze (36) auf den Abschnitt der Öffnung (44) zubewegt wird.

4. Vorrichtung (10) nach Anspruch 3, **dadurch gekennzeichnet, dass** die Mittel eine schräge Kante oder Fläche aufweisen, die so angeordnet ist, dass sie beim Bewegen der Stütze (36) auf den Abschnitt der Öffnung (44) zu unter die Klappe (62) greifen und die Klappe (62) anheben.

5. Vorrichtung (10) nach Anspruch 2 oder 3, **dadurch gekennzeichnet, dass** an der Stütze (36) Mittel angeordnet sind, die die Klappe (62) in der geöffneten Stellung halten, während der Portalwagen (16) durch den Abschnitt der Öffnung (44) bewegt wird.

6. Vorrichtung (10) nach einem der Ansprüche 2 bis 5, **dadurch gekennzeichnet, dass** die Klappe (62) so ausgebildet ist, dass sie sich beim Entfernen der Stütze (36) von dem Abschnitt der Öffnung (44) automatisch schließt.

7. Vorrichtung (10) nach einem der Ansprüche 2 bis 6, **dadurch gekennzeichnet, dass** am Laufgestell (12) ein elastisches Element angeordnet ist, das die Klappe (62) mit einer Kraft in Richtung zu der geschlossenen Stellung hin beaufschlagt.

8. Vorrichtung (10) nach einem der Ansprüche 2 bis 7, **dadurch gekennzeichnet, dass** eine Seite der Klappe (62) an einem seitlichen Rand der Öffnung (44) an einer in Verfahrrichtung des Portalwagens (16) angeordneten Schwenkachse (64) angelenkt ist.

9. Vorrichtung (10) nach einem der Ansprüche 2 bis 8, **dadurch gekennzeichnet, dass** eine Vielzahl von Klappen (62) in Verfahrrichtung des Portalwagens (16) nebeneinander angeordnet sind.

10. Vorrichtung (10) nach einem der Ansprüche 1 bis 9, **dadurch gekennzeichnet, dass** an jeder Seite der Traverse (34) eine Stütze (36) angeordnet ist und ein orthogonal zu einer Verfahrrichtung des Portalwagens (16) gemessener, seitlicher Abstand der beiden Stützen (36) voneinander in einem Höhenbereich mit zunehmender Höhe zunimmt.

11. Vorrichtung (10) nach einem der Ansprüche 1 bis 10, **dadurch gekennzeichnet, dass** an dem Portalwagen (16) Mittel zum Abrollen eines Faser- oder Folienmaterials und/oder Mittel zum Auftragen eines Klebstoffs angeordnet sind.

12. Vorrichtung (10) nach einem der Ansprüche 1 bis 11 mit einer Herstellungsform (20) für ein Bauteil eines Windenergieanlagenrotorblatts, **dadurch gekennzeichnet, dass** sich die Lauffläche (14) über die gesamte Länge der Herstellungsform (20) erstreckt und in variierender Höhe angeordnet sind.

13. Vorrichtung (10) nach einem der Ansprüche 1 bis 12, **dadurch gekennzeichnet, dass** eine Schiene (18) vorhanden ist, auf der die Räder (38) des Portalwagens (16) abrollen.

14. Vorrichtung (10) nach Anspruch 13, **dadurch gekennzeichnet, dass** die Schiene (18) über die gesamte Länge der Herstellungsform (20) auf gleicher Höhe über einem Boden (48) angeordnet ist und die Lauffläche (14) an mindestens einer Stelle schneidet.

## Claims

1. A device (10) for simplifying the work involved in the manufacture of a component for a wind turbine rotor blade in a manufacturing mould (20), wherein the device (10) comprises the following:
• a running frame (12) which has a running surface (14) that is provided for arrangement at the manufacturing mould (20), and
• a gantry trolley (16) with a crossbar (34) and, connected thereto, a lateral support (36), on which wheels (38) are arranged, wherein the gantry trolley (16) is provided for travelling along the manufacturing mould (20) when the crossbar (34) is arranged above the manufacturing mould (20), **characterised in that**
• the running surface (14) has an opening (44) through which the support (36) can be guided.

2. The device (10) according to claim 1, **characterised in that** a hatch (62) is arranged on the running frame (12), which, in a closed position, covers a section of the opening (44) and, in an opened position, enables a travelling of the support (36) in the section of the opening (44).

3. The device (10) according to claim 2, **characterised in that** means are arranged on the support (36), which move the hatch (62) from the closed position into the opened position when the support (36) is moved towards the section of the opening (44).

4. The device (10) according to claim 3, **characterised in that** the means have a sloping edge or surface, which is arranged so that they grip beneath the hatch (62) and lift the hatch (62) when the support (36) moves towards the section of the opening (44).

5. The device (10) according to claim 2 or 3, **characterised in that** means are arranged on the support (36), which hold the hatch (62) in the opened position while the gantry trolley (16) is moved through the section of the opening (44).

6. The device (10) according to one of claims 2 to 5, **characterised in that** the hatch (62) is formed such that it closes automatically when the support (36) moved away from the section of the opening (44).

7. The device (10) according to one of claims 2 to 6, **characterised in that** an elastic member is arranged on the running frame (12), which applies a force to the hatch (62) towards the closed direction.

8. The device (10) according to one of claims 2 to 7, **characterised in that** one side of the hatch (62) on a lateral edge of the opening (44) is hinged to a pivot axis (64) arranged in the direction of travel of the gantry trolley (16).

9. The device (10) according to one of claims 2 to 8, **characterised in that** a plurality of hatches (62) are arranged next to each other in the direction of travel of the gantry trolley (16).

10. The device (10) according to one of claims 1 to 9, **characterised in that** a support (36) is arranged on each side of the crossbar (34) and a lateral distance of both supports (36) from each other, which is measured orthogonally to a direction of travel of the gantry trolley (16), increases in a height range with increasing height.

11. The device (10) according to one of claims 1 to 10, **characterised in that** means for unrolling a fibre or film material and/or means for applying an adhesive are arranged on the gantry trolley (16).

12. The device (10) according to one of claims 1 to 11 with a manufacturing mould (20) for a component of a wind turbine rotor blade, **characterised in that** the running surface (14) extends over the entire length of the manufacturing mould (20) and is arranged at varying height.

13. The device (10) according to one of claims 1 to 12, **characterised in that** a rail (18) is present, on which the wheels (38) of the gantry trolley (16) roll away.

14. The device (10) according to claim 13, **characterised in that** the rail (18) is arranged over the entire length of the manufacturing mould (20) at the same height above a base (48), and intersects the running surface (14) in at least one place.

## Revendications

1. Dispositif (10) de simplification du travail dans la fabrication d'un composant pour une pale de rotor d'éolienne dans un moule de fabrication (20), le dispositif (10) présentant les éléments suivants :
• un châssis de roulement (12) qui présente une surface de roulement (14) qui est prévue pour être disposée sur le moule de fabrication (20), et
• un wagon portique (16) avec une traverse (34) et avec un support (36) latéral qui lui est raccordé et sur lequel sont disposées des roues (38), le wagon portique (16) étant prévu pour se déplacer le long du moule de fabrication (20) quand la traverse (34) est disposée au-dessus du moule de fabrication (20), **caractérisé en ce que**
• la surface de roulement (14) présente une ouverture (44) à travers laquelle le support (36) peut être introduit.

2. Dispositif (10) selon la revendication 1, **caractérisé en ce que**, sur le châssis de roulement (12), il est disposé un clapet (62) qui, dans une position fermée, recouvre un tronçon de l'ouverture (44) et qui, dans une position ouverte, permet un déplacement du support (36) dans le tronçon de l'ouverture (44).

3. Dispositif (10) selon la revendication 2, **caractérisé en ce que**, sur le support (36), il est disposé des moyens qui déplacent le clapet (62) à partir de la position fermée vers la position ouverte quand le support (36) est avancé vers le tronçon de l'ouverture (44).

4. Dispositif (10) selon la revendication 3, **caractérisé en ce que** les moyens présentent une arête ou face oblique qui est disposée de telle sorte que, lors du déplacement du support (36) vers le tronçon de l'ouverture (44), ils agrippent par dessous le clapet (62) et soulèvent le clapet (62).

5. Dispositif (10) selon la revendication 2 ou 3, **caractérisé en ce que**, sur le support (36), il est disposé des moyens qui maintiennent le clapet (62) dans la position ouverte pendant que le wagon portique (16) est déplacé à travers le tronçon de l'ouverture (44).

6. Dispositif (10) selon l'une des revendications 2 à 5, **caractérisé en ce que** le clapet (62) est constitué de telle sorte qu'il se ferme automatiquement quand le support (36) s'éloigne du tronçon de l'ouverture (44).

7. Dispositif (10) selon l'une des revendications 2 à 6, **caractérisé en ce que**, sur le châssis de roulement (12), il est disposé un élément élastique qui soumet le clapet (62) à une force en direction de la position fermée.

8. Dispositif (10) selon l'une des revendications 2 à 7, **caractérisé en ce que**, sur un bord latéral de l'ouverture (44), un côté du clapet (62) est articulé sur une axe de pivotement (64) disposé dans la direction de déplacement du wagon portique (16).

9. Dispositif (10) selon l'une des revendications 2 à 8, **caractérisé en ce qu'**une multiplicité de clapets (62) sont disposés de façon juxtaposée dans la direction de déplacement du wagon portique (16).

10. Dispositif (10) selon l'une des revendications 1 à 9, **caractérisé en ce que**, sur chaque côté de la traverse (34), il est disposé un support (36), et **en ce qu'**une distance latérale des deux supports (36) entre eux, mesurée à angle droit par rapport à une direction de déplacement du wagon portique (16), augmente dans une plage de hauteur quand la hauteur augmente.

11. Dispositif (10) selon l'une des revendications 1 à 10, **caractérisé en ce que**, sur le wagon portique (16), il est disposé des moyens pour dérouler un matériau fibreux ou en feuille et/ou des moyens pour appliquer une colle.

12. Dispositif (10) selon l'une des revendications 1 à 11, avec un moule de fabrication (20) pour un composant d'une pale de rotor d'éolienne, **caractérisé en ce que** la surface de roulement (14) s'étend sur toute la longueur du moule de fabrication (20) et est disposée à hauteur variable.

13. Dispositif (10) selon l'une des revendications 1 à 12, **caractérisé en ce qu'**il y a un rail (18) sur lequel roulent les roues (38) du wagon portique (16).

14. Dispositif (10) selon la revendication 13, **caractérisé en ce que** le rail (18) est disposé sur toute la longueur du moule de fabrication (20) à la même hauteur au-dessus d'un sol et coupe la surface de roulement (14) en au moins un endroit.
